# EUROPÄISCHE PATENTANMELDUNG

(11) **EP 2 412 999 A1**
(43) Veröffentlichungstag der Anmeldung: **01.02.2012**
(21) Anmeldenummer: 10007828.6
(22) Anmeldetag: 28.07.2010
(51) Int. Cl.: F16F 1/373, F16F 9/04

(54) **Hydraulisch dämpfendes Lager**

(71) Anmelder: Carl Freudenberg KG, 69469 Weinheim (DE)
(72) Erfinder: Erl, Andreas, 16761 Henningsdorf (DE); Hack, Rüdiger, 10713 Berlin (DE); Ebert, Michael, 13055 Berlin (DE)

(57) **Zusammenfassung**

Die vorliegende Erfindung betrifft ein Lager (2), aufweisend: ein Auflager (5) zum Befestigen des Lagers (2) an einem ersten Körper (3); ein Traglager (6) zum Befestigen des Lagers (2) an einem zweiten Körper (4); und eine Schichtfeder (7), welche in das Auflager (5) und/oder das Traglager (6) integriert ist und eine zwischen zwei Deckplatten (11, 12) angeordnete Elastomerspur (13) aufweist; wobei zumindest eine der Deckplatten (11, 12) zumindest einen Vorsprung (14, 15) aufweist, welcher sich von der einen Deckplatte (11, 12) in Richtung der anderen Deckplatte (11, 12) in die Elastomerspur (13) hinein erstreckt.

## Beschreibung

### Technisches Gebiet

Die vorliegende Erfindung betrifft ein Lager.

### Stand der Technik

Lager werden eingesetzt, um Schwingungen zu isolieren oder zu dämpfen und die Geräuschbelastung zu senken. Typische Einsatzfälle sind die Lagerung von Kabinen, Motoren, Getrieben, allgemeinen Maschinen, Aggregaten und Vorrichtungen.

Neben hydraulischen Lagern, wie beispielsweise in der DE 20 2005 021 498 U1 beschrieben, sind auch solche Lager allgemein bekannt, welche eine Gasfeder aufweisen und als Luftlager bezeichnet werden.

Neben der Optimierung der sogenannten Starrkörperschwingungen eines Lagerungssystems ist zunehmend die Berücksichtungen der Geräuschabstrahlung bedeutsam. Dabei spielt die zeitbehaftete Energieleitung eine große Rolle.

In Festkörpern lässt sich die gerichtete Ausbreitung mechanischer Energie beobachten, häufig in Form von Einzelimpulsen. Auch Wellenpakete sind eine häufige Erscheinungsform dieser Phänomene. Dies sind mechanische Schwingungen, welche sich räumlich und zeitlich lokalisieren lassen und ein Teilvolumen eines Bauteils erfassen. Dabei schwingen die Teilchen, welche den Festkörper bilden, auf verschiedene Weise synchronisiert gegenüber ihrer momentanen Ruhelage. Über ein Volumen oder eine Oberfläche gemittelt lässt sich dieser Effekt makroskopisch messen.

Der Verlauf der Maxima lässt sich durch eine Einhüllende charakterisieren. Nimmt deren größter Betragswert in Ausbreitungsrichtung bei fortschreitendem Wellenpaket ab, kann der Ankunftsort gegenüber dem Ausgangspunkt gegenüber dieser Schwingungsform als isoliert betrachtet werden (Isolationseffekt).

### Aufgabe der Erfindung

Der Erfindung liegt die Aufgabe zugrunde, ein verbessertes Lager bereitzustellen, bei welchem der lsolationseffekt für eine gerichtete Übertragung von mechanischen Schwingungen und Impulsen zwischen einem Traglager und einem Auflager des Lagers erreicht wird.

### Gegenstand der Erfindung

Diese Aufgabe wird gelöst durch ein Lager mit den Merkmalen des Patentanspruchs 1 sowie durch eine Lageranordnung mit den Merkmalen des Patentanspruchs 14.

Demgemäß wird ein Lager, aufweisend: ein Auflager zum Befestigen des Lagers an einem ersten Körper, ein Traglager zum Befestigen des Lagers an einem zweiten Körper, und eine Schichtfeder, welche in das Auflager und/oder das Traglager integriert ist und eine zwischen zwei Deckplatten angeordnete Elastomerspur aufweist; wobei zumindest eine der Deckplatten zumindest einen Vorsprung aufweist, welcher sich von der einen Deckplatte in Richtung der anderen Deckplatte in die Elastomerspur hinein erstreckt; bereitgestellt.

Weiterhin wird eine Lageranordnung, aufweisend das erfindungsgemäße Lager, welches eine Kabine oder eine Achse eines Fahrzeugs gegen einen Rahmen desselben abstützt, bereitgestellt.

Die der vorliegenden Erfindung zugrunde liegende Idee besteht darin, dass die Wirksamkeit der Isolation dadurch erreicht wird, dass in Richtung der Energieübertragung Elemente des Lagers kraftschlüssig in Reihe geschaltet sind und aufgrund ihrer Gestaltung und des gewählten Werkstoffs ein unterschiedliches frequenz- und amplitudenabhängiges Verhalten aufweisen.

Beispielhaft soll dies an einem Rechteckimpuls nachvollzogen werden, der in das Traglager in Richtung des Auflagers eingebracht wird. Infolgedessen ergibt sich bei weiterhin ruhendem Auflager eine Komprimierung des Luftkammervolumens (in dem Fall, dass das Lager als Luftlager ausgebildet ist). Für diese Betrachtungen wird vorausgesetzt, dass das eingeschlossene Luftvolumen mit zumindest der niedrigsten Eigenfrequenz eine Schwingung vollführt. Deren mechanische Energie wird teilweise an die anderen Elemente in Ausbreitungsrichtung abgegeben. Dies hängt primär von den Masse- und Federeigenschaften dieser Elemente ab. Über die Dämpfungseigenschaften der jeweiligen Werkstoffe kann die angeregte Schwingung durch Dissipationseffekte zum Abklingen gebracht werden.

Ein Werkstoff mit einer geringen Dichte, einer geringen Steife und einer hohen Dämpfung wird dabei je nach Frequenz und Amplitude der Schwingungsanregung einen großen Teil der Schwingungsenergie dissipieren.

Dies gelingt umso besser, wenn in Ausbreitungsrichtung der mechanischen Energie die Grenzflächen eines solchen Werkstoffbereichs eine große Geschwindigkeitsdifferenz aufweisen. Dafür ist es günstig in Ausbreitungsrichtung einen Werkstoffbereich funktional nachzuschalten, der über eine deutlich höhere Steife und höhere Dichte verfügt.

In dem erfindungsgemäßen Lager ist eine solche Anordnung in axialer Richtung durch die Schichtfeder realisiert.

Aus den Unteransprüchen ergeben sich vorteilhafte Ausgestaltungen der Erfindung.

Das Lager kann beispielsweise bei einem Generator, einem Blockheizkraftwerk auf einem Fundament, einem Blockheizkraftwerk auf einem Zwischenrahmen, einem Getriebe einer Windkraftanlage, einem Elektroschrank, einem physikalischen Gerät oder Instrument, einem Bedienstand, insbesondere bei elnem Bedlenstand von Schiffen, Kränen oder mobilen oder stationären Großmaschinen, einer Komfortkabine in oder auf einem Schiff oder einer Transportplattform eingesetzt werden.

Die Elastomerspur kann aus einem Gummi, Polyurethan oder einem thermoplastischen Elastomer ausgebildet sein. Es ist grundsätzlich auch möglich, die Deckplatten der Schichtfeder ohne den zumindest einen Vorsprung vorzusehen. Der zumindest eine Vorsprung hat jedoch den Effekt, dass dieser die Steifigkelt der Schichtfeder und damit die Steifigkeit des Lagers insgesamt erhöht.

Mit "strömungsleitend" ist vorliegend eine flüssigkeitsleitende oder gasleitende Verbindung gemeint, wobei sich ein Volumenstrom bei Betätigung des Lagers ergibt.

Gemäß einer weiteren Weiterbildung des erfindungsgemäßen Lagers sind mehrere der Vorsprünge vorgesehen, welche in der Ebene der Elastomerspur abwechselnd an den beiden Deckplatten vorgesehen sind. Mit in der Ebene" ist vorliegend "in der Ebene gesehen" bzw. entlang der Ebene" gemeint. Dadurch ergibt sich im Querschnitt gesehen eine Meanderform für die Gummispur. Dies hat den Effekt, dass die Steifigkeit der Schichtfeder noch weiter erhöht werden kann. Dadurch verringern sich die Amplitude, welche das Lager ausführt, was wiederum die Lebensdauer des Lagers vorteilhaft verlängert.

Gemäß einer weiteren Weiterbildung des erfindungsgemäßen Lagers sind der eine oder die mehreren Vorsprünge jeweils zumindest abschnittsweise kreisförmig um eine Mittelachse des Lagers angeordnet. Dadurch wird vermieden, dass es eine Vorzugsrichtung gibt. Somit weist das Lager in allen Richtungen gleichmäßige Eigenschaften auf.

Gemäß einer weiteren Weiterbildung des erfindungsgemäßen Lagers ist zwischen dem Auflager und dem Traglager eine Gasfeder ausgebildet, welche von einem Balg begrenzt ist, wobei der Balg mittels eines ersten verdickten Bereichs desselben mit dem Traglager und/oder mittels eines zweiten verdickten Bereichs desselben mit dem Auflager verbunden ist. Die Gasfeder kann Luft oder ein sonstiges Gas aufweisen. Der Balg ist aus einem flexiblen Material, beispielsweise einem flexiblen Kunststoff gebildet. Der erste und zweite verdickte Bereich bringen den Vorteil mit sich, dass sich mittels dieser Bereiche der Balg einfach an dem Auflager und dem Traglager befestigen bzw. austauschen lässt.

Anstelle der Gasfeder ist es auch denkbar, eine Flüssigkeit bei dem erfindungsgemäßen Lager einzusetzen, welche zwischen dem Auflager und dem Traglager angeordnet ist und mit einem Ausgleichsbehälter strömungsleitend verbunden ist, der eine Blähnachgiebigkeit aufweist. Die Flüssigkeit ersetzt bei dieser Weiterbildung das von der Gasfeder bei der oberhalb beschriebenen Weiterbildung eingenommene Volumen. Folglich wirkt dann der Ausgleichsbehälter als Feder. Damit ergibt sich auch bei dieser Weiterbildung ein Lager mit frequenzabhängigen Verhalten.

Gemäß einer weiteren Weiterbildung des erfindungsgemäßen Lagers weist der erste und/oder zweite verdickte Bereich einen dreiecksförmigen Querschnitt auf, welcher reibschlüssig mit dem Traglager und/oder dem Auflager verbunden ist. Ein derartiger, dreiecksförmiger Querschnitt ist besonders gut geeignet, um einen Reibschluss zu erzeugen.

Gemäß einer weiteren Weiterbildung des erfindungsgemäßen Lagers greift der erste und/oder zweite verdickte Bereich in eine korrespondierende Nut in dem Traglager oder dem Auflager ein und/oder der erste und/oder zweite verdickte Bereich wird in die Nut gepresst. Somit hält der Balg mittels Formschluss in der Nut. Dadurch, dass der erste und/oder zweite verdickte Bereich in die Nut gepresst wird, kann der Balg auch bei starken Dehnungen desselben sicher in der Nut fixiert werden.

Gemäß einer weiteren Weiterbildung des erfindungsgemäßen Lagers ist die Nut in einem Bolzen des Traglagers ausgebildet und der erste verdickte Bereich mittels eines mit dem Bolzen verschraubten Gegenhalters in die Nut gepresst, wobei der Gegenhalter vorzugsweise eine Schraube aufweist, welche auf den ersten verdickten Bereich mittels einer um den Schaft der Schraube drehbar vorgesehenen Scheibe drückt. Beim Festziehen der Schraube kann sich diese gegenüber der Scheibe drehen, so dass nur geringe Drehmomente auf den ersten verdickten Bereich übertragen werden.

Gemäß einer weiteren Weiterbildung des erfindungsgemäßen Lagers ist die Nut zwischen einem Abrollelement des Auflagers für ein Abrollen des Balgs und einem das Abrollelement haltenden Abschnitt des Auflagers gebildet und/oder die Nut ist zwischen einem Abrollelement des Traglagers für ein Abrollen des Balgs und einem das Abrollelement haltenden Abschnitt des Traglagers gebildet und/oder die Nut ist in einem Abrollelement des Auflagers oder des Traglagers gebildet. Das Abrollelement ist bevorzugt aus einem anderen Material ausgebildet als der das Abrollelement haltende Abschnitt des Auflagers oder des Traglagers. Beispielsweise kann das Abrollelement aus einem Polymer, insbesondere Polyamid, ausgebildet sein. Bei dem das Abrollelement haltenden Abschnitt des Traglagers handelt es sich insbesondere um einen Bolzen des Traglagers.

Gemäß einer weiteren Weiterbildung des erfindungsgemäßen Lagers ist ein Bolzen des Traglagers in radialer Richtung von einem Abrollelement umgeben, an welchem ein eine Gasfeder des Lagers begrenzender Balg abrolft. Somit kommt dem Bolzen hier eine Doppelfunktion zu: Einerseits dient er der Befestigung des Lagers beispielsweise an einem Rahmen eines Fahrzeugs. Andererseits dient der Bolzen als Tragelement für das Abrollelement,

Gemäß einer weiteren Weiterbildung des erfindungsgemäßen Lagers umfasst das Auflager und/oder das Traglager einen Anschluss für eine Versorgungsleitung für einen Gasaustausch zwischen einer Gasfeder des Lagers und einer Ausgleichseinrichtung, insbesondere einem Ausgleichsbehälter. Mittels der Ausgleichseinrichtung lässt sich der Druck der Gasfeder steuern, wie beispielsweise in der Druckschrift DE 34 34 659 C2 beschrieben. Der Anschluss des Auflagers ist bevorzugt außermittig bezogen auf eine Mittelachse des Bolzens oder der Schichtfeder angeordnet, um eine Kollision mit einer gegebenenfalls vorgesehenen, an späterer Stelle noch näher beschriebenen Anschlagbegrenzung zu vermeiden.

Gemäß einer weiteren Weiterbildung des erfindungsgemäßen Lagers ist die Elastomerspur mit einer Gasfeder des Lagers kraftschlüssig funktional in Reihe geschaltet. Damit ist gemeint, dass die Elastomerspur und die Gasfeder in einer Richtung hintereinander angeordnet und miteinander kraftschlüssig gekoppelt sind.

Gemäß einer weiteren Weiterbildung des erfindungsgemäßen Lagers ist eine Gasfeder sowie eine Anschlagbegrenzung vorgesehen, wobei die Anschlagbegrenzung an der Deckplatte der Schichtfeder angeordnet ist, welche die Gasfeder begrenzt und/oder die Anschlagbegrenzung an einem Gegenhalter eines Bolzens des Lagers angeordnet ist. Demnach reicht die Anschlagbegrenzung in die Gasfeder hinein. Die Anschlagbegrenzung ist vorzugsweise koaxial zu einer Mittelachse des Bolzens und/oder der Schichtfeder angeordnet.

Gemäß einer weiteren Weiterbildung des erfindungsgemäßen Lagers setzt sich ein eine Gasfeder bildendes Volumen des Lagers aus einem Vollzylinder, einem Hohlzylinder und/oder einem halben Torus zusammen.

Die Eigenfrequenz der erfindungsgemäßen Lageranordnung liegt bevorzugt zwischen 1 und 3 Hz.

Gemäß einer Weiterbildung der erfindungsgemäßen Lageranordnung ist die Gasfeder mit einer Ausgleichseinrichtung für einen Gasaustausch verbunden. Dadurch kann der Druck der Gasfeder eingestellt werden. Bevorzugt wird die Gasfeder strömungsleitend mit einem separaten, baulich getrennten Ausgleichsbehälter verbunden, wobei die durchströmbare Verbindungsleitung ein nicht zu kleines Verhältnis aus Länge und Strömungsquerschnitt derselben aufweist. Wesentliches Resultat ist ein deutlich hervortretendes frequenzabhängiges Verhalten des so gebildeten Lagers. Bei Betrachtung der dynamischen Steifigkeit über der Anregungsfrequenz kann sich bei entsprechender Wahl der konstanten wirksamen Einflussgrößen ein Verlauf ergeben, welcher sich durch die nachfolgend aufgeführten Merkmale auszeichnet. Bei kleinen Anregungsfrequenzen entspricht die dynamische Steifigkeit nahezu dem statischen Wert, gefolgt von einem Unterschreiten (Minimum), einem deutlichen Überhöhen und einem nachfolgenden Absinken auf einen gegenüber diesem Maximum geringeren Beharrungswert über einen größeren Frequenzbereich. Dabei ist dieser Beharrungswert größer als der Steifigkeitswert bei kleinen Anregungsfrequenzen unterhalb der Frequenz des Minimums. Der Vorteil des Lagers besteht in der weitgehend unabhängigen Einstellbarkeit der Eigenschaften Tragfähigkeit und Federsteifigkeit. So kann bei sonst gleicher Einfederung allein durch Erhöhen des Gasfederdrucks eine größere Last vom Lager aufgenommen werden. Dies hat bei einem großen Verhältnis zwischen dem Volumen der Gasfeder und der wirksamen Kolbenfläche praktisch keine Änderung der statischen Steifigkeit um den Arbeitspunkt zur Folge. Falls die gegebene Bauraumsituation dies zulässt und ein schwingungstechnisches Erfordernis besteht, kann das erfindungsgemäße Lager mit einem über eine Verbindungsleitung angeschlossenen Ausgleichsbehälter genutzt werden, um eine verbesserte Isolation der aufgelagerten Masse gegenüber einer periodischen Anregung bei niedrigen Frequenzen zu erzielen. Erreicht werden kann dies durch eine Abstimmung bei der das Minimum der dynamischen Steifigkeit auf die zu isolierende Störfrequenz abgestimmt wird.

Die Erfindung wird nachfolgend anhand von Ausführungsbeispielen unter Bezugnahme auf die beiliegenden Figuren der Zeichnungen näher erläutert. Es zeigen:
- Fig. 1: eine Lageranordnung gemäß einem Ausführungsbeispiel der vorliegenden Erfindung, wobei ein Lager derselben zur Hälfte und geschnitten dargestellt ist;
- Fig. 2: eine Lageranordnung gemäß einem weiteren Ausführungsbeispiel der vorliegenden Erfindung, wobei ein Lager derselben zur Hälfte und geschnitten dargestellt ist;
- Fig. 3: eine Lageranordnung gemäß einem noch weiteren Ausführungsbeispiel der vorliegenden Erfindung, wobei ein Lager derselben zur Hälfte und geschnitten dargestellt ist; und
- Fig. 4: eine vergrößerte Ansicht A aus Fig. 1 gemäß einem noch weiteren Ausführungsbeispiel der vorliegenden Erfindung.

In den Figuren bezeichnen gleiche Bezugszeichen gleiche oder funktionsgleiche Komponenten, soweit nichts Gegenteiliges angegeben ist.

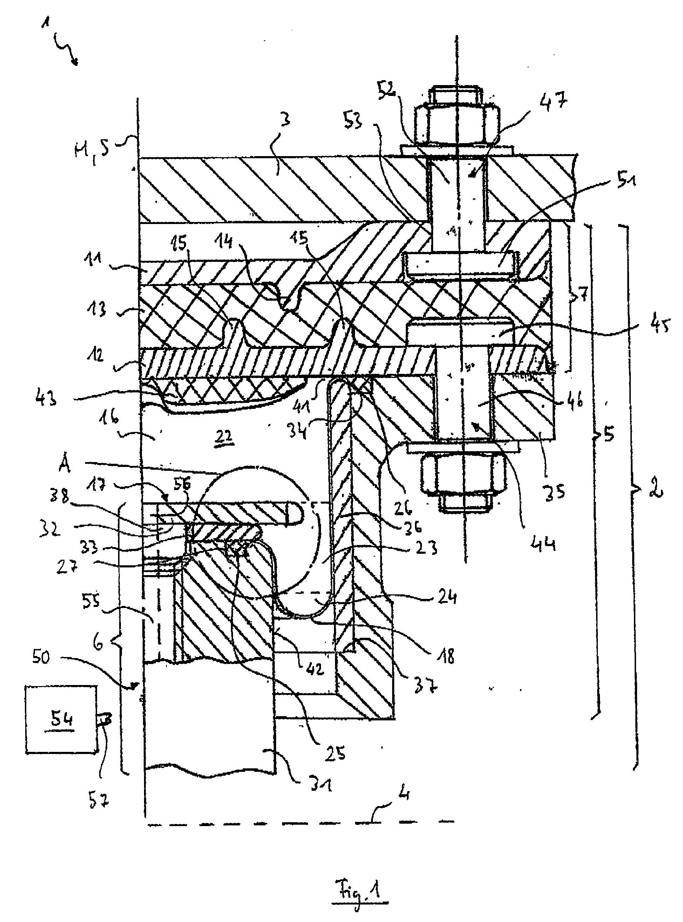

Fig. 1 zeigt eine Lageranordnung 1 gemäß einem Ausführungsbeispiel der vorliegenden Erfindung, wobei ein Lager 2 derselben zur Hälfte und geschnitten dargestellt ist. Eine Symmetrieachse des Lagers 2 ist in Fig. 1 mit S bezeichnet.

Das Lager 2 stützt einen Kabinenboden 3 einer nicht weiter dargestellten Kabine gegen einen gestrichelt angedeuteten Rahmen 4 eines nicht weiter dargestellten Fahrzeugs ab.

Das Lager 2 weist ein Auflager 5 auf, welches an dem Kabinenboden 3 befestigt ist. Weiterhin weist das Lager 2 ein Traglager 6 auf, welches an dem Rahmen 4 befestigt ist. Ferner umfasst das Lager 2 eine Schichtfeder 7, welche in das Auflager 5 integriert ist.

Die Schichtfeder 7 weist zwei übereinander angeordnete Deckplatten 11, 12 auf, zwischen welchen eine Elastomerspur 13 angeordnet ist. An der oberen Deckplatte 11 ist ein Vorsprung 14 ausgebildet, welcher sich in Richtung der unteren Deckplatte 12 erstreckt. An der unteren Deckplatte 12 sind zwei Vorsprünge 15 ausgebildet, welche sich in Richtung der oberen Deckplatte 11 erstrecken. Die Vorsprünge 14, 15 sind in der Ebene der Elastomerspur 13 abwechselnd vorgesehen, so dass sich die Abfolge: Vorsprung 15, Vorsprung 14, Vorsprung 15 ergibt. Damit ergibt sich eine Meanderform für die Elastomerspur 13. Die Vorsprünge 14, 15 bewirken, dass eine radiale Bewegung innerhalb der Elastomerspur 13 abgebremst und dadurch die Steifigkeit der Schichtfeder 7 insgesamt erhöht wird. "Radial" bezieht sich hier auf eine Mittelachse M des Lagers 2, welche vorliegend achsgleich mit der Symmetrieachse S ist. Die Vorsprünge 14, 15 können beispielsweise auch als Sicken in den Deckplatten 11, 12 ausgebildet sein. Weiterhin können sich die Vorsprünge 15 kreisförmig um die Mittelachse M erstrecken.

Zwischen dem Auflager 5 und dem Traglager 6 ist eine Gasfeder 16 vorgesehen. Bei der Gasfeder 16 handelt es sich um ein Volumen eines Gases oder Gasgemisches, beispielsweise Luft. Die Gasfeder 16 wird nach oben hin von der unteren Deckplatte 12 und nach unten hin von einem Gegenhalter 17 des Traglagers 16, welcher an späterer Stelle noch näher erläutert wird, begrenzt. Seitlich wird die Gasfeder 16 von einem Balg 18 begrenzt. Somit ergibt sich, dass sich das Volumen der Gasfeder 16 aus einem Vollzylinder 22, einem Hohlzylinder 23 und einem halben Torus 24 zusammensetzt.

Der Balg 18 weist an seinen gegenüberliegenden Enden jeweils verdickte Bereiche 25 und 26 auf. Die verdickten Bereiche 25, 26 weisen jeweils einen im Wesentlichen rechteckförmigen Querschnitt auf.

Der verdickte Bereich 25 ist in einer Nut 27 in einem Bolzen 31 des Traglagers 6 angeordnet. Der Bolzen 31 ist mit dem Rahmen 4 verbunden, um dadurch das Traglager 6, wie vorstehend beschrieben, mit dem Rahmen 4 zu verbinden. Der Gegenhalter 17 weist eine Schraube 32 und eine Scheibe 33 auf. Die Scheibe 33 ist drehbar um einen Schaft 38 der Schraube 32 gelagert. Die Schraube 32 ist in den Bolzen 31 eingeschraubt und presst mittels der Scheibe 33 den verdickten Bereich 25 in die Nut 27. Damit ist der verdickte Bereich 25 form- und reibschlüssig in der Nut 27 gehalten.

Der verdickte Bereich 26 ist in einer Nut 34 angeordnet. Die Nut 34 wird von einem hülsenförmigen Abschnitt 35 des Auflagers 5 begrenzt. Weiterhin wird die Nut 34 von einem Abrollelement 36 begrenzt. Das Abrollelement 36 weist beispielsweise ebenfalls eine Hülsenform auf und ist formschlüssig zwischen einer Schulter 37 in dem Abschnitt 35 und der unteren Deckschicht 12 gehalten. Die untere Deckschicht 12 presst den verdickten Bereich 26 in die Nut 34, wobei der Balg 18 zwischen der unteren Deckplatte 12 und dem Abrollelement 36 an der mit 41 bezeichneten Stelle durchgeführt ist. Der Balg 18 rollt an dem Abrollelement 36 ab, wenn das Lager 2 betätigt wird, das heißt sich das Auflager 5 gegenüber dem Traglager 6 bewegt. Gegenüberliegend dem Abrollelement 36 rollt der Balg 18 an der Außenfläche 42 des Bolzens 31 ab.

An der Unterseite der unteren Deckplatte 12 ist eine Anschlagbegrenzung 43 vorgesehen. Gegen diese schlägt der Gegenhalter 17 bei sehr großamplitudigen Bewegungen des Auflagers 5 relativ zu dem Traglager 6 an. Bevorzugt ist die Anschlagbegrenzung 43 aus einem offenporigen Schaum ausgebildet, so dass in diesen das Gas aus der Gasfeder 16 eindringen kann.

Der Abschnitt 35 kann mittels eines Bolzens 44 an der Schichtfeder 7 befestigt, insbesondere angeflanscht, sein. Dabei kann der Kopf 45 des Bolzens 44 in die Elastomerspur 13 eingelassen sein und sich ein Schaft 46 des Bolzens 44 durch die untere Deckschicht 12 erstrecken. D.h., dass der Kopf 45 die untere Deckschicht 12 hintergreift. Alternativ könnte auch eine kraftschlüssige Verbindung zwischen der Deckschicht 12 und dem Abschnitt 35 vorgesehen sein.

Weiterhin ist das Lager 2 mittels eines Bolzens 47 mit dem Kabinenboden 3 verbunden. Der Kopf 51 des Bolzens 47 kann dabei in die obere Deckschicht 11 eingelassen sein und sich mit seinem Schaft 52 durch ein Loch 53 in der oberen Deckschicht 11 erstrecken. D.h., dass der Kopf 51 die obere Deckschicht 11 hintergreift.

Somit wird deutlich, dass die Elastomerspur 13 mit der Gasfeder 16 entlang der Mittelachse M kraftschlüssig hintereinander geschaltet ist, d.h., dass ein Energiefluss von dem Kabinenboden 3 zu dem Rahmen 4, und umgekehrt, immer durch die Elastomerspur 13 und durch die Gasfeder 16 verläuft.

Die Lageranordnung 1 weist weiterhin eine Ausgleichseinrichtung 54 für einen Gasaustausch mit dem Gas der Gasfeder 16 auf. Die Gasausgleichseinrichtung 54 ist in Fig. 1 lediglich schematisch angedeutet.

Die Ausgleichseinrichtung 54 ist auf nicht näher dargestellte Weise mit einem traglagerseitigen Anschluss 50 des Lagers 2 verbunden. Der Anschluss 50 umfasst einen Kanal 55 in dem Bolzen 31, welcher mittels einer Öffnung 56 in der Schraube 32 mit dem Gas der Gasfeder 16 strömungsleitend verbunden ist. Eine Versorgungsleitung, welche die Ausgleichseinrichtung 54 mit dem Anschluss 50 bzw. dem Kanal 55 verbindet, ist mit dem Bezugszeichen 57 in Fig. 1 bezeichnet.

Das in dem Kanal 55 enthaltene Gasvolumen wird vorliegend auch dazu genutzt, um gewünschte schwingungstechnische Eigenschaften des Lagers 2 zu erzielen. Denn das in dem Kanal 55 enthaltende Gasvolumen schwingt in Abhängigkeit von dem Querschnitt und der Länge des Kanals 55 sowie der Anregungsfrequenz und anderen Faktoren bei einer Betätigung des Lagers 2 mit und beeinflusst dadurch dessen schwingungstechnische Eigenschaften.

Die Ausgleichseinrichtung 54 kann beispielsweise als ein Gasbehälter ausgebildet sein. Weiterhin kann die Ausgleichseinrichtung 54 dazu ausgebildet sein, die Gasfeder 16 mit zusätzlichem Gas zu beaufschlagen oder Gas aus der Gasfeder 16 abzulassen, um dadurch den Abstand zwischen dem Auflager 5 und dem Traglager 6 einzustellen.

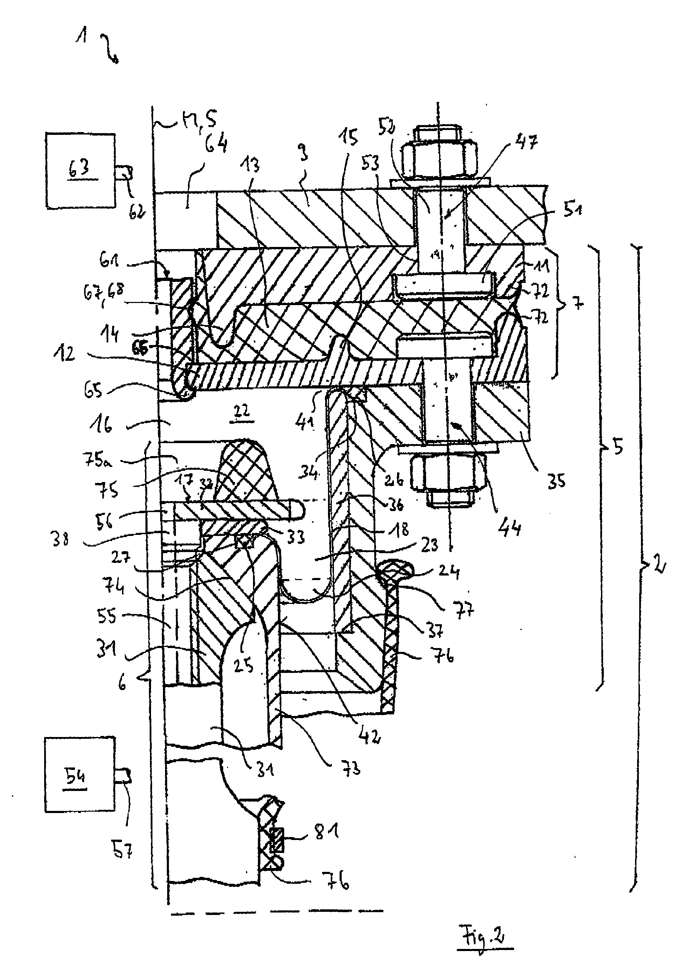

Fig. 2 zeigt eine Lageranordnung 1 gemäß einem weiteren Ausführungsbeispiel der vorliegenden Erfindung, wobei ein Lager 2 derselben zur Hälfte und geschnitten dargestellt ist.

Nachfolgend wird lediglich auf die Unterschiede zwischen der Lageranordnung 1 gemäß Fig. 2 und der Lageranordnung 1 gemäß Fig. 1 eingegangen.

Das Lager 2 gemäß Fig. 2 wird mit einem auflagerseitigen Anschluss 61 zum Anschließen einer weiteren Versorgungsleitung 62 einer weiteren Ausgleichseinrichtung 63 vorgesehen. Die Ausgleichseinrichtung 63 dient bevorzugt der Einstellung des Abstandes zwischen dem Auflager 5 und dem Traglager 6.

Der Anschluss 61 erstreckt sich auf nicht näher dargestellte Weise durch eine Öffnung 64 in dem Kabinenboden 3 und durch die Schichtfeder 7 hindurch in die Gasfeder 16 hinein. Der Anschluss 61 ist in Form einer Hülse ausgebildet, welche mittels einer Umbördelung 65 und einer Schulter 66 mit der unteren Deckschicht 12 formschlüssig verbunden ist. Weiterhin weist der Anschluss 61 eine Flächenpressung 67 mit einem Abschnitt 68 der dach oben gezogenen Elastomerspur 13 auf. Die Flächenpressung 67 sorgt für einen gas- und flüssigkebdichten Abschluss zwischen der Elastomerspur 13 und dem Anschluss 61.

Wie ferner in Fig. 2 zu erkennen, sind lediglich zwei Vorsprünge 14,15 vorgesehen, welche sich in die Elastomerschicht 13 hineinerstrecken.

Weiterhin sind an der unteren und oberen Deckschicht 11, 12 randseitige Vorsprünge 72 vorgesehen, welche einander im Wesentlichen gegenüberliegen, sich zueinander hin erstrecken und bevorzugt kreisförmig um die Mittellinie M umlaufen.

Im Unterschied zu dem Ausführungsbeispiel nach Fig. 1 ist bei dem Ausführungsbeispiel nach Fig. 2 die Nut 25 in einem traglagerseitigen Abrollelement 73 angeordnet, welches den Bolzen 31 an dessen Umfang umschließt. Das Abrollelement 73 wie auch der Bolzen 31 verjüngen sich jeweils konisch, angedeutet durch das Bezugszeichen 74, hin zu der Gasfeder 16. Der Balg 18 rollt daher bei dem Ausführungsbeispiel gemäß Fig. 2 an dem Abrollelement 73 ab.

Anstelle der Anschlagbegrenzung 43, wie in Fig. 1 dargestellt, umfasst das Lager 2 aus Fig. 2 eine Anschlagbegrenzung 75, welche im Wesentlichen eine Ringform mit einem in etwa parabelförmigen Querschnitt aufweist Die Anschlagbegrenzung 75 ist koaxial auf der Mittelachse M des Lagers 2 angeordnet. Durch die mittige Öffnung 75a der Anschlagbegrenzung 75 ist die Öffnung 56 des Kanals 55 mit der Gasfeder 16 strömungsleitend verbunden. Die Anschlagbegrenzung 75 kann wie die Anschlagbegrenzung 43 aus einem Schaum ausgebildet sein.

Das Lager 2 weist weiterhin einen Balg 76 auf, welcher einerseits an dem Abschnitt 35 mittels einer Hintergreifung 77 und andererseits an dem Bolzen 31 mittels eines Klemmrings 81 gehalten ist. Der Balg 76 schützt den Balg 18 vor Staub und Schmutz und erhöht somit die Lebensdauer des Balgs 18. Der Balg 76 ist aus einem sehr verschleißfähigen Material ausgebildet.

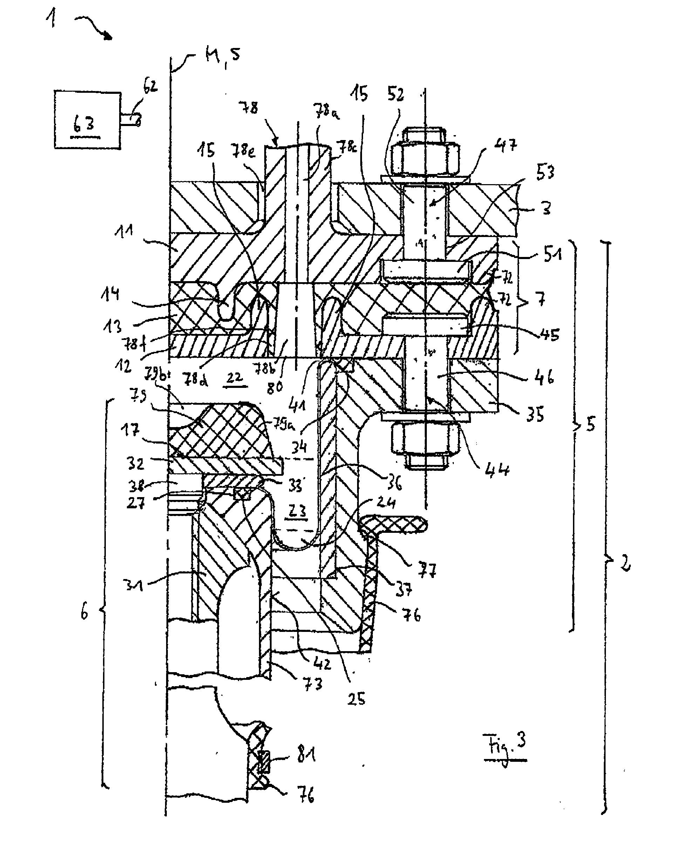

Fig. 3 zeigt eine Lageranordnung 1 gemäß einem noch weiteren Ausführungsbeispiel der vorliegenden Erfindung, wobei ein Lager 2 derselben zur Hälfte und geschnitten dargestellt ist.

Nachfolgend wird lediglich auf die Unterschiede zwischen der Lageranordnung 1 gemäß Fig. 3 und der Lageranordnung 1 gemäß Fig. 2 eingegangen.

Bei dem Lager 2 gemäß Fig. 3 wird anstelle des auftagerseitigen Anschlusses 61 aus Fig. 2 ein auflagerseitiger Anschluss 78 zum Anschließen der weiteren Versorgungsleitung 62 der weiteren Ausgleichseinrichtung 63 vorgesehen. Der Anschluss 78 ist bezogen auf die Mittellinie M versetzt, also außermittig, angeordnet. Der Anschluss 78 ist derart versetzt angeordnet, dass eine traglagerseitige Anschlagbegrenzung 79 entlang der Mittellinie M, also entlang der Richtung, in welcher das Lager 2 einfedert, gesehen nicht in Überdeckung mit einer gasfederseitigen Öffnung 80 des Anschlusses 78 gelangt. Dadurch bleibt die Öffnung 80 selbst bei auf die Anschlagbegrenzung 79 abgesenktem Auflager 5 frei. Mittels der Öffnung 80 steht die Gasfeder 16 in strömungsleitender Verbindung mit der Ausgleichseinrichtung 63. Der Anschluss 78 kann sich aus einem Kanal 78a, welcher in der oberen Deckplatte 11 verläuft, und einem Kanal 78b, welcher in der Elastomerspur 13 verläuft, zusammen. Der Kanal 78a kann insbesondere in einer sich nach oben durch eine Öffnung 78e in dem Kabinenboden 3 erstreckenden Auskragung 78c der oberen Deckplatte 11 verlaufen. Ferner kann der Kanal 78b in einer sich nach unten durch eine Öffnung 78f in der unteren Deckplatte 12 erstreckenden Auskragung 78d der Elastomerspur 13 verlaufen. Die Vorsprünge 15 der unteren Deckplatte 12 können derart vorgesehen sein, dass diese die Öffnung 78f begrenzen.

Die traglagerseitige Anschlagbegrenzung 79 weist eine Scheibenform 79a mit einer mittigen Vertiefung 79b auf. Die Anschlagbegrenzung 79 ist auf dem Gegenhalter 17 angeordnet.

Im Unterschied zu dem Ausführungsbeispiel nach Fig. 2 ist kein Kanal 55 und damit auch keine Anschlussmöglichkeit für die Ausgleichseinrichtung 54 in Fig. 3 vorgesehen. Allerdings wäre es selbstverständlich möglich, bei Bedarf eine derartige Anschlussmöglichkeit vorzusehen.

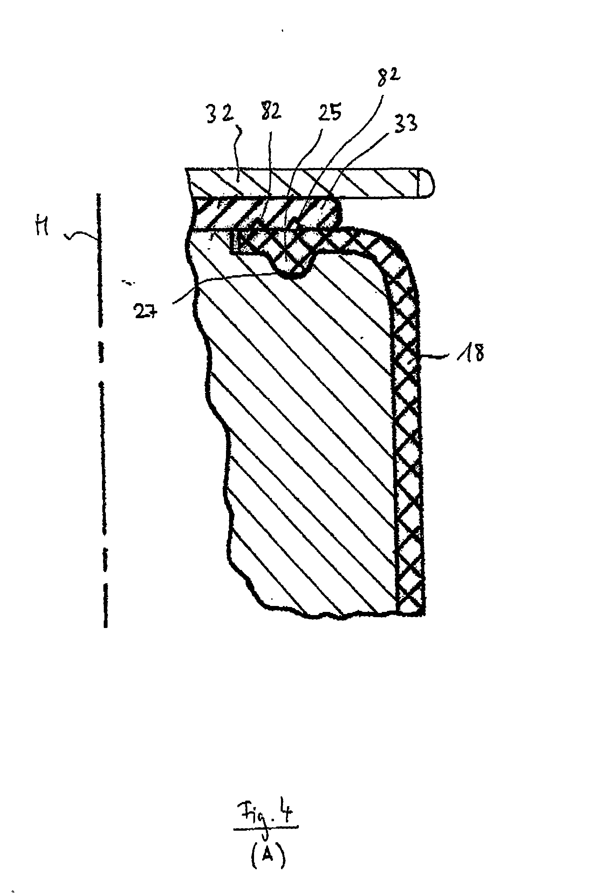

Fig. 4 zeigt eine vergrößerte Ansicht A aus Fig. 1 gemäß einem noch weiteren Ausführungsbeispiel der vorliegenden Erfindung.

Gemäß dem Ausführungsbeispiel nach Fig. 4 ist die Nut 27 halbkreisförmig ausgebildet. Entsprechend ist auch der verdickte Bereich 25 des Balgs 18 an seiner Unterseite halbkreisförmig ausgebildet. An seiner Oberseite weist der verdickte Bereich 25 des Balgs 18 dreiecksförmige Querschnitte 82 auf, welche gegen die Scheibe 33 reibschlüssig anliegen. Die dreiecksförmigen Querschnitte 82 sind vorzugsweise um die Mittellinie M kreisförmig umlaufend ausgebildet. Die kreisförmigen Querschnitte 82 verbessern einen Reibschluss zwischen dem Balg 18 und der Scheibe 33 noch weiter.

Das Lager 2 ist in besonderer Weise für einen Reparatur- und Austauschfall geeignet. Anschaulich kann dafür folgender Ablauf angegeben werden:
Für einen Austausch des Lagers 2, siehe Fig. 1, wird die Kabine gegen die Wirkung der Schwerkraft abgestützt, so dass keine Höhenverschiebung eintritt.
Jetzt kann das Lager 2 von dem Ausgleichsbehälter 54, 63 abgekoppelt werden, der Überdruck im Lager 2 gegenüber der Lagerumgebung abgebaut,
die eventuelle Verbindungsleitung 57, 62 zum Ausgleichsbehälter 54, 63 gelöst und entfernt werden.

Anschließend wird die Schraubverbindung 47 zwischen dem Auflager 5 und dem Kabinenboden 3 gelöst und das Auflager 5 abgesenkt bis dieses mittels der Anschlagbegrenzung 43 auf dem Traglager 6 ruht.

Weiter kann jetzt die Schraubverbindung 31 des Traglagers 6 zum Rahmen 4 gelöst werden.

Sinngemäß lässt sich diese Arbeitsfolge auch auf andere Lagerungssituationen übertragen. Auf diese Weise ist ein Lager 2 gebildet, das für den Instandhaltungsfall gut geeignet ist.

Obwohl die Erfindung vorliegend anhand bevorzugter Ausführungsbeispiele beschrieben wurde, ist sie darauf nicht beschränkt, sondern auf vielfältige Art und Weise modifizierbar. Insbesondere schließt "ein" keine Vielzahl aus.

Insbesondere sei darauf hingewiesen, dass die vorliegend beschriebenen Ausführungsbeispiele nach den Fig. 1-3 beliebig miteinander kombinierbar sind. So könnte auch das Ausführungsbeispiel nach Fig. 1 das Abrollelement 73 gemäß Fig. 2 aufweisen. Oder aber, die Art der Befestigung des verdickten Bereichs 26 des Balgs 18 könnte für den verdickten Bereich 25 entsprechend vorgesehen werden.

## Patentansprüche

1. Lager (2), aufweisend;
ein Auflager (5) zum Befestigen des Lagers (2) an einem ersten Körper (3);
ein Traglager (6) zum Befestigen des Lagers (2) an einem zweiten Körper (4); und
eine Schichtfeder (7), welche in das Auflager (5) und/oder das Traglager (6) integriert ist und eine zwischen zwei Deckplatten (11, 12) angeordnete Elastomerspur (13) aufweist;
wobei zumindest eine der Deckplatten (11, 12) zumindest einen Vorsprung (14, 15) aufweist, welcher sich von der einen Deckplatte (11, 12) in Richtung der anderen Deckplatte (11, 12) in die Elastomerspur (13) hinein erstreckt.

2. Lager nach Anspruch 1,
**dadurch gekennzeichnet,**
**dass** mehrere der Vorsprünge (14, 15) vorgesehen sind, welche in der Ebene der Elastomerspur (13) abwechselnd an den beiden Deckplatten (11, 12) vorgesehen sind.

3. Lager nach Anspruch 1 oder 2,
**dadurch gekennzeichnet,**
**dass** der eine oder die mehreren Vorsprünge (14, 15) jeweils zumindest abschnittsweise kreisförmig um eine Mittelachse (M) des Lagers (2) angeordnet sind.

4. Lager nach einem der vorhergehenden Ansprüche,
**dadurch gekennzeichnet,**
**dass** zwischen dem Auflager (5) und dem Traglager (6) eine Gasfeder (16) ausgebildet ist, welche von einem Balg (18) begrenzt ist, wobei der Balg (18) mittels eines ersten verdickten Bereichs (25) desselben mit dem Traglager (6) und/oder mittels eines zweiten verdickten Bereichs (26) desselben mit dem Auflager (5) verbunden ist.

5. Lager nach Anspruch 4,
**dadurch gekennzeichnet,**
**dass** der erste und/oder zweite verdickte Bereich (25, 26) einen dreiecksförmigen Querschnitt (82) aufweist, welcher reibschlüssig mit dem Traglager (6) und/oder dem Auflager (5) verbunden ist.

6. Lager nach Anspruch 4 oder 5,
**dadurch gekennzeichnet,**
**dass** der erste und/oder zweite verdickte Bereich (25, 26) in eine korrespondierende Nut (27, 34) in dem Traglager (6) und/oder dem Auflager (5) eingreift und/oder der verdickte Bereich (25, 26) in die Nut (27) gepresst ist.

7. Lager nach Anspruch 6,
**dadurch gekennzeichnet,**
**dass** die Nut (27) in einem Bolzen (31) des Traglagers (6) ausgebildet ist und der erste verdickte Bereich (25) mittels eines mit dem Bolzen (31) verschraubten Gegenhalters (17) in die Nut (27) gepresst ist, wobei der Gegenhalter (17) vorzugsweise eine Schraube (32) aufweist, weiche auf den ersten verdickten Bereich (25) mittels einer um den Schaft (38) der Schraube (32) drehbar vorgesehenen Scheibe (33) drückt.

8. Lager nach Anspruch 6 oder 7,
**dadurch gekennzeichnet,**
**dass** die Nut (34) zwischen einem Abrolletement (36) des Auflagers (5) für ein Abrollen des Balgs (18) und einem das Abrollelement (36) haltenden Abschnitt (35) des Auflagers (5) gebildet ist und/oder die Nut (27) zwischen einem Abrollelement (73) des Traglagers (6) für ein Abrollen des Balgs (18) und einem das Abrollelement (73) haltenden Abschnitt (31) des Traglagers (6) gebildet ist und/oder die Nut (27) in einem Abrollelement (73) des Auflagers (5) oder des Traglagers (6) gebildet ist.

9. Lager nach einem der vorhergehenden Ansprüche,
**dadurch gekennzeichnet,**
**dass** ein Bolzen (31) des Traglagers (6) in radialer Richtung von einem Abrollelement (73) umgeben ist, an welchem ein eine Gasfeder (16) des Lagers (2) begrenzender Balg (18) abrollt.

10. Lager nach einem der vorhergehenden Ansprüche,
**dadurch gekennzeichnet,**
**dass** das Auflager (5) und/oder das Traglager (6) einen Anschluss (50, 61, 78) für eine Versorgungsleitung (57, 62) für einen Gasaustausch zwischen einer Gasfeder (16) des Lagers (2) und einer Ausgleichseinrichtung (54, 63), insb. einem Ausgleichsbehälter, aufweist.

11. Lager nach einem der vorhergehenden Ansprüche,
**dadurch gekennzeichnet,**
**dass** die Elastomerspur (13) mit einer Gasfeder (16) des Lagers (2) kraftschlüssig funktional in Reihe geschaltet ist.

12. Lager nach einem der vorhergehenden Ansprüche,
**dadurch gekennzeichnet,**
**dass** eine Gasfeder (16) sowie eine Anschlagbegrenzung (43, 75, 79) vorgesehen ist, wobei die Anschlagbegrenzung (43) an einer Deckplatte (12) der Schichtfeder (7) angeordnet ist, welche die Gasfeder (16) begrenzt, und/oder die Anschlagbegrenzung (75, 79) an einem Gegenhalter (17) eines Bolzens (31) des Traglagers (6) angeordnet ist.

13. Lager nach einem der vorhergehenden Ansprüche,
**dadurch gekennzeichnet,**
**dass** sich ein eine Gasfeder (16) bildendes Gasvolumen des Lagers (2) aus einem Vollzylinder (22), einem Hohlzylinder (23) und/oder einem halben Torus (24) zusammensetzt.

14. Lageranordnung (1), aufweisend ein Lager (2) nach einem der vorhergehenden Ansprüche, welches eine Kabine oder eine Achse eines Fahrzeugs gegen einen Rahmen desselben abstützt.

15. Lageranordnung nach Anspruch 14
**dadurch gekennzeichnet,**
**dass** die Gasfeder (16) des Lagers (2) mit einer Ausgleichseinrichtung (54, 63) für einen Gasaustausch verbunden ist.
